# EUROPEAN PATENT APPLICATION

(11) **EP 4 481 936 A1**
(43) Date of publication of application: **25.12.2024**
(21) Application number: 23180295.0
(22) Date of filing: 20.06.2023
(51) Int. Cl.: H01M 50/581, H01M 50/583, H01M 50/503, H01M 50/514, H01M 50/204

(54) **CELL CONTACT SYSTEM AND MANUFACTURING METHOD**

(71) Applicant: Röchling Automotive SE, 68165 Mannheim (DE)
(72) Inventor: Dill, Peter, 85051 Ingolstadt (DE)
(74) Representative: Ullrich & Naumann PartG mbB

(57) **Abstract**

A cell contact system (114) for interconnecting at least two battery cells (112) is disclosed. The cell contact system (114) comprising at least one busbar (116) comprising at least two connecting portions (118) each connectable to at least one of the at least two battery cells (112) and at least one bridging portion (120) arranged between the at least two connecting portions (118), wherein the bridging portion (120) comprises at least one injection molded electrical connector (122) through which electric current is transported between the at least two connecting portions (118), wherein the cell contact system (114) further comprises at least one electrically isolating plastic casing (126) configured for at least partially enclosing the bridging portion (120) of the busbar (116).

Further, a method of manufacturing a cell contact system (114) and a battery pack (110) are disclosed.

## Description

### Technical Field

The invention relates to a cell contact system, to a method of manufacturing a cell contact system and to a battery pack. The devices and methods according to the present invention may generally be applied in the field of electrical power storage, such as electrical and/or electrochemical energy storage, e.g. in electrically powered entities. Specifically, the invention may be used in the field of electro mobility, such as in fuel cell, hybrid and/or electric vehicles, e.g. in cars and/or trucks. Other applications however are feasible.

### Background art

Cell contact systems for batteries are generally used for interconnecting battery cells. Generally, safety measures such as fuses and circuit breakers that cut off current flow in case of accidents or overloads are mandatory when interconnecting battery cells. These safety measures can be simple metal wires or strips that melt when too much current flows through them, thereby stopping or interrupting the current. However, typically, fuses and circuit breakers are separately manufactured devices that are integrated into the circuitry when interconnecting the battery cells.

As an example, DE10302793A1 describes a fuse or fuse board that has at least one melting strip and at least one first region connected to the strip and with at least one electrical connection and at least one second region connected to the strip and with at least one electrical connection, whereby the at least one melting strip and the first and second regions are made of the same metallic casting material using a pressure casting technique. An independent claim is also included for: (a) a method of manufacturing an inventive fuse.

US5631619A and WO9629721A1 describes a female fuse having a one piece fuse link and thermal mass injection molded around fuse clips. The fuse link, thermal mass, and fuse clips are enclosed in an insulating housing.

JPH02273434A describes a fixed resistor of an electricity conducting member is connected to a coil spring extended by a tensile force exerted via a connecting piece of a shape memory alloy. Both ends of the connecting body are connected respectively to electrode members. The connecting piece is made of a shape memory alloy, for example Ni-To-Co alloy, of a ring-shape in normal temperature to function as a connection ring, but loses the function as a connecting piece when the fixed resistor generates heat due to abnormal current and the memorized shape is restored according to the temperature rise. The shape memory alloy has an accurate temperature of transformation and the transformation is easily obtained at a required low temperature.

Alternatively, safety measures are integrated into the batteries themselves, such as into a battery cover plate. For example, CN112216934 relates to a battery cover plate assembly and a single battery. The battery cover plate assembly comprises a conductive plate, a positive terminal, a negative terminal and a composite safety assembly. The composite safety assembly is connected in series between the upper surface of the conductive plate and the negative terminal. The composite safety assembly comprises a memory alloy part and a current limiting element which can be connected in series, the memory alloy part is used for converting a compressed state into an extended state when the temperature rises to a first temperature so as to conduct the negative terminal and the conductive plate, so that the battery forms an external short circuit, and the current limiting element is used for limiting a short-circuit current; and when the temperature is lower than the first temperature, the memory alloy piece is in a compressed state, and a gap exists between the negative terminal and the conductive plate and is insulated. According to the battery cover plate assembly and the single battery, gas production additives such as lithium carbonate do not need to be added into the battery pole piece, so that the cycle and storage performance of the battery are not influenced. In addition, a current limiting element is arranged in the composite safety assembly, so that the short-circuit discharge current can be effectively limited.

Despite the advantages involved in known cell contact systems, several technical challenges remain. Thus, usually, the production costs when integrating separately manufactured devices or using batteries with already integrated safety measures are quite high.

### Problem to be solved

It is therefore desirable to provide devices and methods, which address the above-mentioned shortcomings of known devices and methods. Specifically, a cell contact system, a method of manufacturing a cell contact system and a battery pack shall be proposed, which allow for a more flexible and cost efficient production.

### Summary

This problem is addressed by a cell contact system, a method of manufacturing a cell contact system and a battery pack with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a cell contact system for interconnecting at least two battery cells is proposed. The cell contact system comprises at least one busbar, the busbar comprising at least two connecting portions each connectable to at least one of the at least two battery cells and at least one bridging portion arranged between the at least two connecting portions, wherein the bridging portion comprises at least one injection molded electrical connector, i.e. acting as a current safety element, through which electric current is transported between the at least two connecting portions. The cell contact system further comprises at least one electrically isolating plastic casing configured for at least partially enclosing the bridging portion of the busbar.

The term "cell contact system" as used herein is a broad term and is to be given its ordinary and customary meaning to a person of ordinary skill in the art and is not to be limited to a special or customized meaning. The term specifically may refer, without limitation, to an arbitrary system configured for contacting individual battery cells. In particular, the cell contact system may be or may comprise a system configured for the electrification of a powertrain of an entity to be electrically powered, e.g. of an electric vehicle.

The term "busbar" as used herein is a broad term and is to be given its ordinary and customary meaning to a person of ordinary skill in the art and is not to be limited to a special or customized meaning. The term specifically may refer, without limitation, to an electrical conductor configured for power distribution.

The term "connecting portion" as used herein is a broad term and is to be given its ordinary and customary meaning to a person of ordinary skill in the art and is not to be limited to a special or customized meaning. The term specifically may refer, without limitation, to a part of the busbar configured for electrically contacting the battery cells.

The term "bridging portion" as used herein is a broad term and is to be given its ordinary and customary meaning to a person of ordinary skill in the art and is not limited to a special or customized meaning. The term specifically may refer, without limitation, to a part of the busbar comprising at least one injection molded electrical connector and being arranged between the busbar's at least two connecting portions. As used herein, the term "injection molded electrical connector" refers, without limitation, to an electrically conductive strip and/or bar manufactured by performing a process of injection molding. Thus, the injection molded electrical connector may be or may comprise at least one electrical conductor formed by injection molding and subsequently solidified. In particular, the injection molded electrical connector may be configured to act as a safety element, e.g. as an element configured for cutting off an electric current in case of an accident and/or overload, i.e. by one or more of melting and/or breaking through.

As an example, the parameters of the electrical connector, i.e. its width, length, height and material composition, may be selected and/or adapted according to its ability for cutting off the electric current, i.e. for fulfilling predefined safety conditions, e.g. predefined safety requirements for electrically powered vehicles.

The term "plastic casing" as used herein is a broad term and is to be given its ordinary and customary meaning to a person of ordinary skill in the art and is not to be limited to a special or customized meaning. The term specifically may refer, without limitation, to a housing and/or cover comprising a plastic material. The plastic casing has electrically insulating characteristics, such as properties that prevent current from being transferred via the plastic casing. As used herein, the term "electrically isolating plastic casing" may, without limitation, refer to a housing and/or cover comprising an electrically insulating material, such as a material having insulating characteristics, preventing current transfer via the housing and/or cover.

The term "at least partially enclosing" as used herein is a broad term and is to be given its ordinary and customary meaning to a person of ordinary skill in the art and is not to be limited to a special or customized meaning. The term specifically may refer, without limitation, to a relative physical arrangement between at least two objects and/or elements, wherein a first one of the at least two objects circumferentially encircles at least 55% of the second one of the at least two objects in at least one plane. Thus, the term "the plastic casing at least partially enclosing the bridging portion" refers to the plastic casing, in at least one plane, encircling at least 55% of a circumference of the bridging portion in the at least one plane. Specifically, the plastic casing may, in at least one plane, encircle at least 70% of the circumference of the bridging portion in that plane. More specifically, the plastic casing may, in at least one plane, encircle at least 80% of the circumference of the bridging portion in that plane. In particular, the plastic casing may fully enclose the bridging portion in at least one plane, i.e. encircle 100% of the circumference of the bridging portion in that plane.

The injection molded electrical connector may for example comprise at least one electrical connector material selected from the group consisting of: tin; zinc; one or more of their alloys, specifically one or more alloys comprising at least one of tin and zinc. In particular, the electrical connector material may specifically be a material suitable to be injection molded, i.e. for being used in a commonly known injection molding process.

At least one of the two connecting portions may specifically comprise at least one material selected from the group consisting of aluminum; steel; copper; one or more of their alloys, specifically one or more alloys comprising at least one of aluminum, steel and copper. In particular, all connecting portions may comprise at least one material selected from the group consisting of aluminum; steel; copper; one or more of their alloys, specifically one or more alloys comprising at least one of aluminum, steel and copper.

The plastic casing may for example comprise at least one plastic material selected from the group consisting of a thermoplastic material, such as polyethylene; a thermoset plastic material, such as epoxy, polyurethane.

As an example, the electrical connector may be fixed to at least one of the connecting portions by a form fit connection, such as by a form fit connection between the electrical connector and the at least one of the connecting portions. In particular, the electrical connector may be fixed to all connecting portions by a form fit connection. In particular, the form fit connection may specifically be established by the electrical connector being injection molded at least partially onto and/or around and/or into the connecting portions.

Specifically, in case the electrical connector is fixed to the at least one of the connecting portions by the form fit connection, the at least one of the connecting portions may comprise an undercut and/or cutout, e.g. at least one through hole or tapered hole, such as a cone, in at least one plane into which the electrical connector is at least partially molded, specifically injection molded. Thus, for the purpose of fixing the electrical connector to the connecting portion in a form fit, at least one of the connecting portions may comprise such an undercut and/or cutout into which the electrical connector may at least partially be injected into.

The cell contact system may further comprise at least one shape metal alloy (SMA) actuator configured for, by changing its shape, intercepting the transport of the electric current between the at least two connecting portions in case a temperature of the SMA actuator is above a threshold temperature. As an example, the SMA actuator may be arranged at least partially within the plastic casing.

Additionally or alternatively, the SMA actuator, by changing its shape, i.e. when heated above a threshold temperature, may break the electrical connector. In particular, and specifically irrespective whether the SMA actuator is arranged within the plastic casing, the SMA actuator may be configured for, by changing its shape, breaking the electrical connector. In particular, a direction of the shape change of the SMA actuator may be perpendicular to a direction of current flow through the electrical connector. Thus, as an example, an overall direction of the shape change of the SMA actuator may be in a direction having an angle of 90±20°, specifically of 90±10°, more specifically of 90±5°, to a direction of current flow through the electrical connector. For example, the SMA actuator may be fixed in at least one end to the isolating plastic casing.

In a further aspect of the present invention, a method of manufacturing a cell contact system for interconnecting at least two battery cells is disclosed. The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method comprises the following steps:
a) providing at least two connecting portions each connectable to at least one of the at least two battery cells;
b) generating at least one electrical connector by performing an injection molding process using at least one electrical connector material, e.g. by injecting the molten electrical connector material into a mold for the electrical connector, such that electric current is transportable between the at least two connecting portions through the electrical connector, thereby generating at least one bridging portion between the at least two connecting portions;
c) providing at least one electrically isolating plastic casing at least partially enclosing the bridging portion.

In step b), for performing the injection molding process, further, not mentioned, molds and/or cavities may be provided at least temporarily, in order to give a desired form and/or shape to the electrical connector.

The method may further comprise the following step:
d) providing at least one SMA part, wherein the at least one SMA part is arranged such that the electrical connector is breakable by a shape change of the SMA part, thereby generating a SMA actuator.

The method may comprise manufacturing a cell contact system as described herein. Specifically, the method may be configured for manufacturing the cell contact system as disclosed herein. Thus, for possible definitions and options of the method, reference may be made to the description of the cell contact system as disclosed herein, specifically as described above or as further described below.

In a further aspect of the present invention, a battery pack is disclosed. The battery pack comprises at least two battery cells and a cell contact system as described herein, which contacts the at least two battery cells.

The term "battery pack" as used herein is a broad term and is to be given its ordinary and customary meaning to a person of ordinary skill in the art and is not to be limited to a special or customized meaning. The term specifically may refer, without limitation, to a set of any number of, preferably identical, batteries and/or individual battery cells. In particular, the battery pack, i.e. the at least two battery cells of the battery pack, are contacted by the cell contact system. Thus, preferably, in the battery pack, the battery cells are connected to each other, i.e. by the busbar of the cell contact system via the at least two connecting portions and the at least one bridging portion, such as in series or parallel or a mixture thereof to form an energy storage package having predefined properties, such as a predefined voltage, capacity or power density.

For possible definitions and options of the battery pack, reference may be made to the description of the cell contact system as disclosed herein, specifically as described above or as further described below.

Additionally or alternatively, the cell contact system may be manufactured by performing the method as disclosed herein. Thus, the cell contact system of the battery pack may be manufactured by performing the method of manufacturing a cell contact system for interconnecting at least two battery cells as described herein. Thus, further, for possible definitions and options of the battery pack, reference may be made to the description of the method as disclosed herein, specifically as described above or as further described below.

As an example, at least one of the at least two battery cells, preferably all of the battery cells, in the battery pack may be selected from the group consisting of a cylindrical battery, a pouch battery, a prismatic battery.

The proposed devices and methods provide a large number of advantages over known devices and methods of similar kind. In particular, the devices and methods according to the present application may allow for a higher flexibility, e.g. a more flexible process, specifically in the buildup of the cell contact system, i.e. in the dimensioning, positioning and/or arranging of electrical connectors of the cell contact system, than known methods and devices.

Further, the devices and methods according to the present application may be more resource conserving than known devices and methods. In particular, the proposed devices and methods, specifically by injection molding at least one electrical connector, may decrease manufacturing time and may thus be less costly and show reduced manufacturing costs compared to known devices and methods. Furthermore, specifically due to the electrical connectors acting as a current safety element being injection molded, the proposed devices and methods may allow for less individual parts, i.e. no separate fuse, e.g. in the cell contact system and in the battery pack. This may further help reduce manufacturing costs and complexity of the assembly.

Furthermore, the present invention, specifically the proposed devices and methods, may allow for a more precise safety control of the battery related parameters during battery lifecycle or battery usage, such as to a voltage and current, e.g. due to the injection molded electrical connector acting as a current safety element and optionally additionally due to the SMA actuator. In particular, the current safety element, i.e. a fuse, by injection molding the electrical connector, may be adapted to fuse requirements specifically for its application in the cell contact system. Thus, finetuning may be cheaper, specifically compared to usage of separately manufactured fuses. The current safety element may thus be better adjusted and therefore more reliable to its application. Thus, the proposed devices and methods may increase the safety of electrically powered vehicles, specifically of its cell contact system and battery pack, compared to known cell contact systems and battery packs.

Summarizing and without excluding further possible embodiments, the following embodiments may be envisaged:
Embodiment 1: A cell contact system for interconnecting at least two battery cells, comprising
   at least one busbar comprising
      at least two connecting portions each connectable to at least one of the at least two battery cells and
      at least one bridging portion arranged between the at least two connecting portions, wherein the bridging portion comprises at least one injection molded electrical connector, i.e. acting as a current safety element, through which electric current is transported between the at least two connecting portions,
   wherein the cell contact system further comprises at least one electrically isolating plastic casing configured for at least partially enclosing the bridging portion of the busbar.
Embodiment 2: The cell contact system according to the preceding embodiment, wherein the injection molded electrical connector comprises at least one electrical connector material selected from the group consisting of: tin; zinc; one or more of their alloys, specifically one or more alloys comprising at least one of tin and zinc.
Embodiment 3: The cell contact system according to any one of the preceding embodiments, wherein at least one of the two connecting portions, preferably all connecting portions, comprises at least one material selected from the group consisting of: aluminum; steel; copper; one or more of their alloys, specifically one or more alloys comprising at least one of aluminum, steel and copper.
Embodiment 4: The cell contact system according to any one of the preceding embodiments, wherein the plastic casing comprises at least one plastic material selected from the group consisting of: a thermoplastic material, such as polyethylene; a thermoset plastic material, such as epoxy, polyurethane.
Embodiment 5: The cell contact system according to any one of the preceding embodiments, wherein the electrical connector is fixed to at least one of the connecting portions, preferably to all connecting portions, by a form fit connection between the electrical connector and the at least one of the connecting portions.
Embodiment 6: The cell contact system according to the preceding embodiment, wherein in case the electrical connector is fixed to the at least one of the connecting portions by the form fit connection, the at least one of the connecting portions comprises an undercut and/or cutout, e.g. at least one through hole or tapered hole, such as a cone, in at least one plane into which the electrical connector is at least partially molded.
Embodiment 7: The cell contact system according to any one of the preceding embodiments, wherein the cell contact system further comprises at least one shape metal alloy (SMA) actuator configured for, by changing its shape, intercepting the transport of the electric current between the at least two connecting portions in case a temperature of the SMA actuator is above a threshold temperature.
Embodiment 8: The cell contact system according to the preceding embodiment, wherein the SMA actuator is arranged at least partially within the plastic casing.
Embodiment 9: The cell contact system according to any one of the two preceding embodiments, wherein the SMA actuator, by changing its shape, breaks the electrical connector.
Embodiment 10: The cell contact system according to any one of the three preceding embodiments, wherein a direction of the shape change of the SMA actuator is perpendicular to a direction of current flow through the electrical connector.
Embodiment 11: A method of manufacturing a cell contact system for interconnecting at least two battery cells, comprising
   a) providing at least two connecting portions each connectable to at least one of the at least two battery cells;
   b) generating at least one electrical connector by performing an injection molding process using at least one electrical connector material, e.g. by injecting the molten electrical connector material into a mold for the electrical connector, such that electric current is transportable between the at least two connecting portions through the electrical connector, thereby generating at least one bridging portion between the at least two connecting portions;
   c) providing at least one electrically isolating plastic casing at least partially enclosing the bridging portion.
Embodiment 12: The method according to the preceding embodiment, further comprising:
   d) providing at least one SMA part, wherein the at least one SMA part is arranged such that the electrical connector is breakable by a shape change of the SMA part, thereby generating a SMA actuator.
Embodiment 13: The method according to the two preceding embodiments, wherein the method comprises manufacturing a cell contact system according to any one of the preceding embodiments.
Embodiment 14: A battery pack comprising at least two battery cells and a cell contact system according to any one of the preceding embodiments referring to a cell contact system contacting the at least two battery cells.
Embodiment 15: The battery pack according to the preceding embodiment, wherein the cell contact system is manufactured by performing the method according to any one of the preceding method embodiments.
Embodiment 16: The battery pack according to any one of the two preceding embodiments, wherein at least one of the at least two battery cells, preferably all of the battery cells, are selected from the group consisting of: a cylindrical battery, a pouch battery, a prismatic battery.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a battery pack with an embodiment of a cell contact system in a schematic view; and
- Figures 2 and 3: show different flow charts of a method of manufacturing a cell contact system for interconnecting at least two battery cells.

### Detailed description of the embodiments

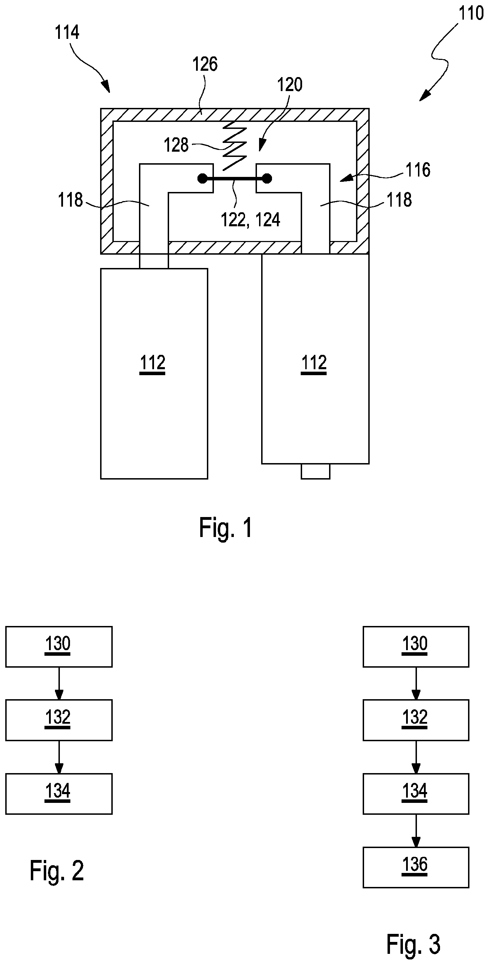

Figure 1 illustrates an embodiment of a battery pack 110 in a schematic view. The battery pack 110 comprises at least two battery cells 112 and a cell contact system 114. The cell contact system 114 comprises at least one busbar 116, wherein the busbar 116 comprises at least two connecting portions 118, each connectable to at least one of the at least two battery cells 112. The busbar 116 further comprises at least one bridging portion 120 arranged between the at least two connecting portions 118. The bridging portion 120 comprises at least one injection molded electrical connector 122 through which electric current is transported between the at least two connecting portions 118. Specifically, the injection molded electrical connector 122 may acting as a current safety element, such as a fuse 124. The cell contact system 114 further comprises at least one electrically isolating plastic casing 126 configured for at least partially enclosing the bridging portion 120 of the busbar 118.

The electrical connector 122 may specifically be fixed to at least one of the connecting portions 118 by a form fit connection. For this purpose, the connecting portions 118 may for example comprise at least one undercut and/or cutout in at least one plane into which the electrical connector 122 may be molded 118. This is illustrated in Fig. 1 by two round accumulations of material on the right and left side of the electrical connector 122.

Further, optionally, the cell contact system 114 may comprise at least one SMA actuator 128 configured for, by changing its shape, intercepting the transport of the electric current between the at least two connecting portions 118 in case a temperature of the SMA is above a threshold temperature. For example, the SMA actuator 128 may, in case its temperature is above the threshold temperature, elongate such that the SMA actuator 128 breaks through the electrical connector 122, thereby intercepting current transport between the connecting portions 118. Other arrangements of the SMA actuator 128, such as breaking the electrical connector 122 by a shortening of the SMA actuator 128, though not illustrated, are also feasible. The SMA actuator 128 may specifically be fixed in at least one end to the isolating plastic casing 126.

Figures 2 and 3 illustrate different flow charts of a method of manufacturing a cell contact system 114 for interconnecting at least two battery cells 112. The method comprises the following steps:
a) (denoted by reference number 130) providing at least two connecting portions 118 each connectable to at least one of the at least two battery cells 112;
b) (denoted by reference number 132) generating at least one electrical connector 122 by performing an injection molding process using at least one electrical connector material, e.g. by injecting the molten electrical connector material into a mold for the electrical connector 122, such that electric current is transportable between the at least two connecting portions 118 through the electrical connector 122, thereby generating at least one bridging portion 120 between the at least two connecting portions 118;
c) (denoted by reference number 134) providing at least one electrically isolating plastic casing 126 at least partially enclosing the bridging portion 120.

Optionally, the method may further comprise the following step:
d) (denoted by reference number 136) providing at least one SMA part, wherein the at least one SMA part is arranged such that the electrical connector 122 is breakable by a shape change of the SMA part, thereby generating an SMA actuator 128.

### List of reference numbers

- 110: battery pack
- 112: battery cell
- 114: cell contact system
- 116: busbar
- 118: connecting portion
- 120: bridging portion
- 122: electrical connector
- 124: fuse
- 126: plastic casing
- 128: SMA actuator
- 130: step a)
- 132: step b)
- 134: step c)
- 136: step d)

## Claims

1. A cell contact system (114) for interconnecting at least two battery cells (112), comprising
at least one busbar (116) comprising
at least two connecting portions (118) each connectable to at least one of the at least two battery cells (112) and
at least one bridging portion (120) arranged between the at least two connecting portions (118), wherein the bridging portion (120) comprises at least one injection molded electrical connector (122) through which electric current is transported between the at least two connecting portions (118),
wherein the cell contact system (114) further comprises at least one electrically isolating plastic casing (126) configured for at least partially enclosing the bridging portion (120) of the busbar (116).

2. The cell contact system (114) according to the preceding claim, wherein the injection molded electrical connector (122) comprises at least one electrical connector material selected from the group consisting of: tin; zinc; one or more of their alloys.

3. The cell contact system (114) according to any one of the preceding claims, wherein at least one of the two connecting portions (118) comprises at least one material selected from the group consisting of aluminum; steel; copper; one or more of their alloys.

4. The cell contact system (114) according to any one of the preceding claims, wherein the plastic casing (126) comprises at least one plastic material selected from the group consisting of: a thermoplastic material; a thermoset plastic material.

5. The cell contact system (114) according to any one of the preceding claims, wherein the electrical connector (122) is fixed to at least one of the connecting portions (118) by a form fit connection between the electrical connector (122) and the at least one of the connecting portions (118).

6. The cell contact system (114) according to the preceding claim, wherein in case the electrical connector (122) is fixed to the at least one of the connecting portions (118) by the form fit connection, the at least one of the connecting portions (118) comprises an undercut and/or cutout in at least one plane into which the electrical connector (122) is at least partially molded.

7. The cell contact system (114) according to any one of the preceding claims, wherein the cell contact system (114) further comprises at least one shape metal alloy (SMA) actuator (128) configured for, by changing its shape, intercepting the transport of the electric current between the at least two connecting portions (118) in case a temperature of the SMA actuator (128) is above a threshold temperature.

8. The cell contact system (114) according to the preceding claim, wherein the SMA actuator (128) is arranged at least partially within the plastic casing (126) .

9. The cell contact system (114) according to any one of the two preceding claims, wherein the SMA actuator (128), by changing its shape, breaks the electrical connector (122).

10. The cell contact system (114) according to any one of the three preceding claims, wherein a direction of the shape change of the SMA actuator (128) is perpendicular to a direction of current flow through the electrical connector (122).

11. A method of manufacturing a cell contact system (114) for interconnecting at least two battery cells (112), comprising
a) providing at least two connecting portions (118) each connectable to at least one of the at least two battery cells (112);
b) generating at least one electrical connector (122) by performing an injection molding process using at least one electrical connector material, such that electric current is transportable between the at least two connecting portions (118) through the electrical connector (122), thereby generating at least one bridging portion (120) between the at least two connecting portions (118);
c) providing at least one electrically isolating plastic casing (126) at least partially enclosing the bridging portion (120).

12. The method according to the preceding claim, further comprising:
d) providing at least one SMA part, wherein the at least one SMA part is arranged such that the electrical connector (122) is breakable by a shape change of the SMA part, thereby generating a SMA actuator (128).

13. The method according to the two preceding claims, wherein the method comprises manufacturing a cell contact system (114) according to any one of the preceding claims.

14. A battery pack (110) comprising at least two battery cells (112) and a cell contact system (114) according to any one of the preceding claims referring to a cell contact system (114) contacting the at least two battery cells.

15. The battery pack (110) according to the preceding claim, wherein the cell contact system (114) is manufactured by performing the method according to any one of the preceding method claims.
